# EUROPEAN PATENT APPLICATION

(11) **EP 4 764 865 A1**
(43) Date of publication of application: **24.06.2026**
(21) Application number: 25212234.6
(22) Date of filing: 30.10.2025
(51) Int. Cl.: G06F 11/14, G06F 11/20

(54) **DATA STORAGE APPARATUS AND OPERATING METHOD THEREOF**

(30) Priority: 17.12.2024 KR 20240188900
(71) Applicant: SK hynix Inc., Bubal-eub Icheon-si Gyeonggi-do 17336 (KR)
(72) Inventor: KIM, Se Joong, 17336 Icheon-si, Gyeonggi-do (KR); KIM, Jin Pyo, 17336 Icheon-si, Gyeonggi-do (KR)
(74) Representative: Isarpatent

(57) **Abstract**

A data storage apparatus includes a nonvolatile memory apparatus and a controller. The controller is configured to set a first threshold time associated with a power loss protection operation when the data storage apparatus enters a power loss protection mode and to back up debug data upon reaching the first threshold time after the external power loss.

## Description

### BACKGROUND

### 1. Technical Field

The present technology relates to a semiconductor apparatus, and more particularly, to a data storage apparatus capable of backing up data due to external power loss and an operating method thereof.

### 2. Related Art

A data storage apparatus using a nonvolatile memory apparatus as a storage medium may operate by receiving power from an external apparatus.

A sudden power off (SPO) event, in which power is suddenly cut off during an operation of the data storage apparatus, may occur. As a result, data stored in an operating memory or a cache memory of the data storage apparatus may be lost, or an operation, such as an erase operation, a write operation, or the like, being performed in the nonvolatile memory apparatus may remain incomplete.

To mitigate such risks, the data storage apparatus may use an auxiliary power supply to complete the ongoing operation or store data related to an operational state at the time of SPO occurrence in the nonvolatile memory apparatus.

### SUMMARY

A data storage apparatus in accordance with an embodiment of the present technology may include: a nonvolatile memory apparatus; and a controller configured to set a first threshold time associated with a power loss protection operation when the data storage apparatus enters a power loss protection mode due to an external power loss and to back up debug data to the nonvolatile memory apparatus upon reaching the first threshold time after the external power loss.

A data storage apparatus in accordance with an embodiment of the present technology may include: a volatile memory apparatus; a nonvolatile memory apparatus; and a controller configured to back up recovery data stored in the volatile memory apparatus to the nonvolatile memory apparatus when the data storage apparatus enters a power loss protection mode due to an external power loss and to back up debug data to the nonvolatile memory apparatus upon detecting a preset error during the backup operation of the recovery data.

An operating method of a data storage apparatus in accordance with an embodiment of the present technology is an operating method of a data storage apparatus including a nonvolatile memory apparatus and a controller for controlling the nonvolatile memory apparatus, and may be comprising: setting, by the controller, a first threshold time associated with a power loss protection operation when the data storage apparatus enters a power loss protection mode due to an external power loss; and backing up, by the controller, debug data to the nonvolatile memory apparatus upon reaching the first threshold time after the external power loss.

The present technology enables the safe backup of debug data required for recovery after power loss in a data storage apparatus.

Accordingly, even though the backup of data being processed at the time of an external power loss is incomplete, the data storage apparatus can resume their operations upon power restoration using the debug data.

### BRIEF DESCRIPTION OF THE DRAWINGS

FIG. 1 is a configuration diagram of a data storage apparatus in accordance with an embodiment.
FIG. 2 is a configuration diagram of a nonvolatile memory apparatus in accordance with an embodiment.
FIG. 3 is a diagram illustrating data stored in a buffer memory apparatus in accordance with an embodiment.
FIG. 4 is a configuration diagram of a PLP manager in accordance with an embodiment.
FIGS. 5 to 7 are conceptual diagrams illustrating a debug data backup method in accordance with embodiments.
FIG. 8 is a flowchart illustrating an operating method of the data storage apparatus in accordance with an embodiment.

### DETAILED DESCRIPTION

Hereinafter, embodiments of the present technology are described in more detail with reference to the accompanying drawings.

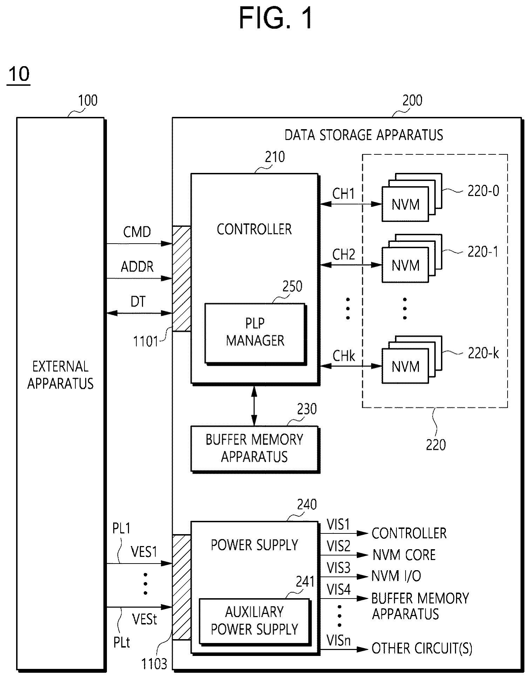

FIG. 1 is a configuration diagram of an electronic system 10 in accordance with an embodiment.

Referring to FIG. 1, the electronic system 10 includes an external apparatus 100 and a data storage apparatus 200.

The external apparatus 100 is a processing apparatus that controls the data storage apparatus 200 in order to store data.

The external apparatus 100 includes at least one of a central processing unit (CPU), an image signal processing unit (ISP), a digital signal processing unit (DSP), a graphics processing unit (GPU), a vision processing unit (VPU), a field programmable gate array (FPGA), or a neural processing unit (NPU).

The data storage apparatus 200 includes a controller 210, nonvolatile memory apparatuses 220 (e.g., 220-0 to 220-k, k being a natural number), a buffer memory apparatus 230, a power supply 240, a signal connector 1101, and a power connector 1103.

The controller 210 controls all operations of the data storage apparatus 200.

The data storage apparatus 200 receives a command signal CMD and an address signal ADDR from the external apparatus 100 and transmits/receives data DT to/from the external apparatus 100, through the signal connector 1101. The signal connector 1101 is implemented in various types based on an interface method between the external apparatus 100 and the data storage apparatus 200.

The interface method between the external apparatus 100 and the data storage apparatus 200 includes at least one of various interface protocols such as a universal serial bus (USB) protocol, a multimedia card (MMC) protocol, a peripheral component interconnection (PCI) protocol, a PCI-express (PCI-E) protocol, an advanced technology attachment (ATA) protocol, a serial-ATA (SATA) protocol, a parallel-ATA (PATA) protocol, a small computer system interface (SCSI) protocol, an enhanced small disk interface (ESDI) protocol, an integrated drive electronics (IDE) protocol, a private protocol, a system management bus (SMBus) protocol, an inter-integrated circuit (I2C) protocol, and an improved inter-integrated circuit (I3C) protocol.

The controller 210 analyzes and processes a signal received from the external apparatus 100. The controller 210 controls operations of functional blocks provided therein using firmware or software that operates the data storage apparatus 200. Although not illustrated, the controller 210 includes a volatile memory apparatus used as a cache memory.

The buffer memory apparatus 230 temporarily stores data to be stored in the nonvolatile memory apparatus 220. In addition, the buffer memory apparatus 230 temporarily stores data read from the nonvolatile memory apparatus 220. The data temporarily stored in the buffer memory apparatus 230 is transmitted to the external apparatus 100 or the nonvolatile memory apparatus 220 under the control of the controller 210. In some embodiments, the data storage apparatus 200 is a DRAM-less apparatus that does not include the buffer memory apparatus 230.

The nonvolatile memory apparatuses 220 serve as the storage medium of the data storage apparatus 200. Each of the nonvolatile memory apparatuses 220 is connected to the controller 210 through a corresponding one of a plurality of channels CH0 to CHk (k is a natural number). One or more nonvolatile memory apparatuses (NVM) are connected to one channel. The nonvolatile memory apparatuses (NVM) connected to one channel are connected to the same signal bus and data bus.

The power supply 240 generates a plurality of internal power supply voltages VIS1 to VISn by converting levels of external power supply voltages VES1 to VESt, which are input through the power connector 1103. The power connector 1103 includes a plurality of power lines PL1 to PLt. The plurality of internal power supply voltages VIS1 to VISn generated by the power supply 240 are supplied to the controller 210, the nonvolatile memory apparatuses 220, the buffer memory apparatus 230, and other circuits (not illustrated). The power supply 240 includes an auxiliary power supply 241. When sudden power off (SPO, external power loss) is detected, the auxiliary power supply 241 supplies the internal power supply voltages VIS1 to VISn so that the data storage apparatus 200 is normally shut down. The auxiliary power supply 241 includes, but is not limited to, large-capacity capacitors. In another embodiment, the auxiliary power supply 241 can be installed outside the power supply 240.

The controller 210 includes components necessary for managing data exchange between the external apparatus 100 and the nonvolatile memory apparatuses 220. These components include various functional blocks (not illustrated), such as a processor, an external interface device, an operating memory, an error detection and correction circuit (ECC), and a memory interface device.

In particular, the controller 210 in accordance with the embodiment of the present technology further includes a power loss protection (PLP) manager 250. In an embodiment, upon detecting that the external power supply voltage supplied to the power supply 240 has dropped below a reference value, indicating an external power loss (SPO) event, the PLP manager 250 enters a power loss protection (PLP) mode. Upon entering the PLP mode, the PLP manager 250 backs up recovery data to the nonvolatile memory apparatus 220. When a threshold time associated with the PLP mode is reached, the PLP manager 250 subsequently backs up debug data to the nonvolatile memory apparatus 220.

The recovery data includes data that is being processed or used by the data storage apparatus 200 at the time of the occurrence of the SPO event, such as user data, mapping data, housekeeping (HK) operation-related metadata, or the like. In an embodiment, the debug data includes information necessary for recovering the data storage apparatus 200 when power is restored after the SPO event, such as hardware (HW) information, firmware (FW) information, log information, or other related details of the data storage apparatus 200.

No recovery data is backed up to the nonvolatile memory apparatus 220 during the time supported by the auxiliary power supply 241 after the SPO event occurs. Then, when power is restored to the data storage apparatus 200, the debug data is used to restore the data storage apparatus 200 to its state prior to the occurrence of the SPO event.

If no debug data is backed up within the time supported by the auxiliary power supply 241 after the occurrence of the SPO event, the data storage apparatus 200 enters an open fail state, rendering it inoperable even after power is restored. Accordingly, upon detecting the SPO event, it is essential to securely back up the debug data within a limited time.

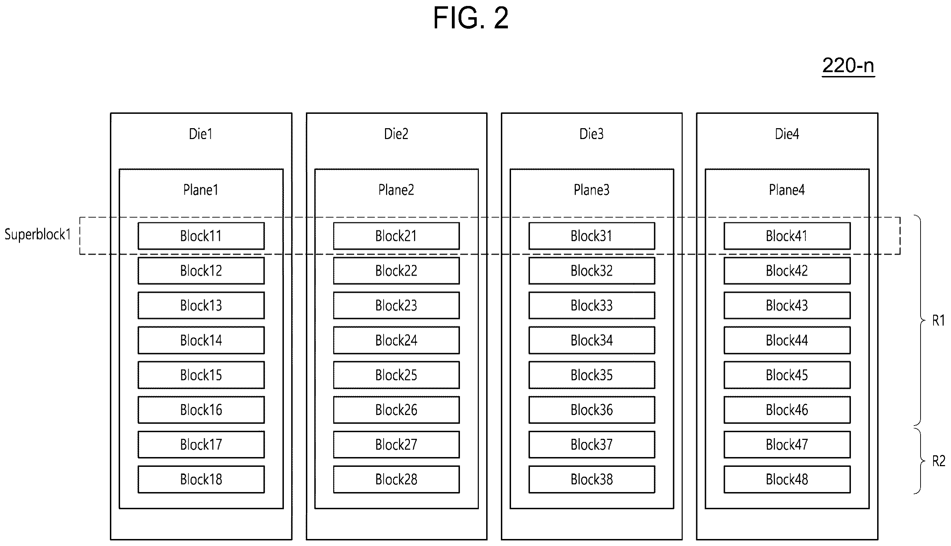

FIG. 2 is a configuration diagram of the nonvolatile memory apparatus 220-n in accordance with an embodiment. The nonvolatile memory apparatus 220-n illustrated in FIG. 2 may correspond to any of the nonvolatile memory apparatuses 220 shown in FIG. 1.

Referring to FIG. 2, the nonvolatile memory apparatus 220-n includes one or more memory dies, e.g., Die 1 to Die4. The memory dies Die 1 to Die4 include planes Plane 1 to Plane 4, respectively. For illustrative convenience, FIG. 2 illustrates a state in which each memory die includes one plane. However, in another embodiment, each memory die includes more than one plane.

The planes Plane 1 to Plane 4 include a plurality of memory blocks Block11 to Block18, Block21 to Block28, Block31 to Block38, and Block41 to Block48, respectively. Each of the plurality of memory blocks Block11 to Block48 includes a plurality of pages (not illustrated), and each of the plurality of pages includes a plurality of memory cells (not illustrated) connected to a single word line.

The plurality of planes Plane 1 to Plane 4 operate independently of one another. In order to improve the parallel processing performance of the data storage apparatus 200, the controller 210 logically connects a memory block in each of the plurality of planes Plane 1 to Plane 4 to form a single superblock. FIG. 2 illustrates a first superblock Superblock1 including the memory blocks Block11, Block21, Block31, and Block41 respectively included in the planes Plane 1 to Plane 4.

The plurality of memory blocks Block11 to Block18, Block21 to Block28, Block31 to Block38, and Block41 to Block48 are divided into a plurality of regions including a first region R1 and a second region R2. The first region R1 is a region for storing user data transmitted/received to/from the external apparatus 100. The second region R2 is a dump region allocated for backing up recovery data and debug data when the SPO event is detected in the data storage apparatus 200. In other words, the second region R2 is a region for temporarily storing data in response to the power status of the data storage apparatus 200.

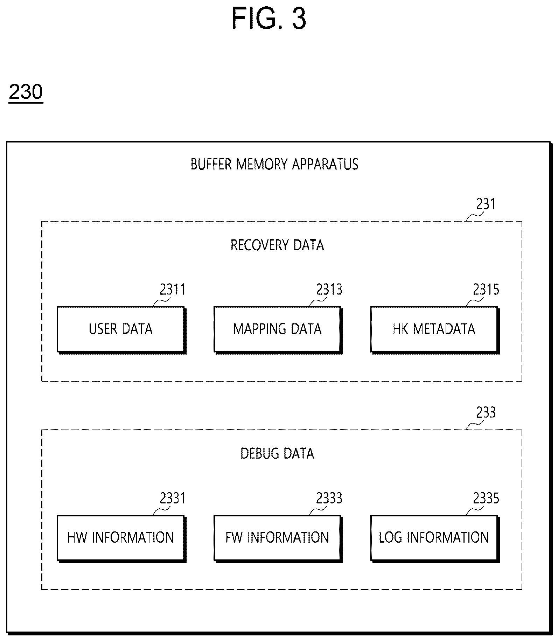

FIG. 3 is a diagram illustrating data stored in the buffer memory apparatus 230 in accordance with an embodiment.

Referring to FIG. 3, the buffer memory apparatus 230 stores recovery data 231 and debug data 233.

The recovery data 231 includes data that is being processed or used by the data storage apparatus 200 at the time of SPO event, such as user data 2311, mapping data 2313, housekeeping (HK) metadata 2315 related to an internal operation of the data storage apparatus 200, or the like.

The user data 2311 refers to data that has not yet been programmed into the nonvolatile memory apparatus 220 but is stored in the buffer memory apparatus 230 or the cache memory (not illustrated) within the controller 210, according to a write request from the external apparatus 100.

The mapping data 2313 represents mapping information between a logical address of the external apparatus 100 and a physical address of the nonvolatile memory apparatus 220. The mapping data 2313 is at least partially loaded from the nonvolatile memory apparatus 220 to the buffer memory apparatus 230 or the cache memory (not illustrated) within the controller 210 when the data storage apparatus 200 is in operation.

The HK metadata 2315 includes block management information of the nonvolatile memory apparatus 220, which is used by the controller 210 for internal operations to manage the data storage apparatus 200, and data status (valid/invalid) information. The internal operations include operations such as a wear leveling operation and a garbage collection operation.

The debug data 233 includes information necessary for recovering the data storage apparatus 200 to the state before the SPO event and driving the data storage apparatus 200 when power is re-supplied. The debug data 233 may include hardware (HW) information 2331, firmware (FW) information 2333, log information 2335, or the like of the data storage apparatus 200.

The HW information 2331 includes status information of the controller 210 at the time of SPO occurrence. This status information may include system register information, command queue information, ongoing command information, unfinished command information, charge status and discharge history of the auxiliary power supply 241, or the like.

The FW information 2333 includes a data stack containing commands being processed by firmware executed by the controller 210 at the time of SPO occurrence, function call information (Call stack), which includes global variables and static variables stored by the firmware during operation, or the like.

The log information 2335 includes command or work history executed by the data storage apparatus 200 at the time of SPO occurrence, error records preceding the SPO event, firmware error records preceding the SPO event, or the like.

From another perspective, the debug data 233 represents minimal essential data required to recover the user data 2311, even if the user data 2311 is lost due to the SPO.

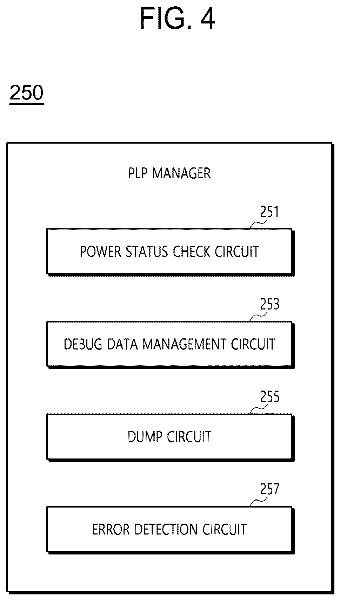

FIG. 4 is a configuration diagram of the PLP manager 250 in accordance with an embodiment.

Referring to FIG. 4, the PLP manager 250 includes a power status check circuit 251, a debug data management circuit 253, a dump circuit 255, and an error detection circuit 257.

The power status check circuit 251 detects whether an external power supply voltage VEXT provided to the power supply 240 falls below a preset reference value. When the external power supply voltage VEXT falls below the reference value, the power status check circuit 251 outputs an SPO event occurrence signal and switches the data storage apparatus 200 to the PLP mode.

The power status check circuit 251 also measures the remaining life of the auxiliary power supply 241, such as the estimated time until the auxiliary power supply 241 is fully discharged.

In an embodiment, the debug data management circuit 253 collects debug data and calculates the size of the debug data in response to the SPO event occurrence signal. Based on the size of the debug data, the debug data management circuit 253 determines a minimum time required for backing up the debug data and sets a first threshold time accordingly. The debug data management circuit 253 provides the determined first threshold time to the error detection circuit 257.

In an embodiment, the debug data management circuit 253 calculates the size of each type of recovery data, including the user data 2311, the mapping data 2313, and the HK metadata 2315. Based on the size of each type, the debug data management circuit 235 determines a second threshold time required for completing the backup of the corresponding recovery data. The debug data management circuit 253 provides the error detection circuit 257 with the second threshold time for each type of recovery data.

The debug data management circuit 253 also considers the remaining life of the auxiliary power supply 241 when determining the first threshold time or the second threshold time.

The dump circuit 255 backs up the recovery data to the nonvolatile memory apparatus 220 in response to the SPO event occurrence signal. Additionally, the dump circuit 255 backs up the debug data to the nonvolatile memory apparatus 220 in response to an error signal output from the error detection circuit 257.

In an embodiment, if the backup of any type of recovery data is not completed by the time the first threshold time or the second threshold time is reached, the error detection circuit 257 outputs an error signal. In response to the error signal, the dump circuit 255 backs up the debug data.

The error detection circuit 257 determines whether a preset error has occurred in the data storage apparatus 200 and outputs an error signal after the data storage apparatus 200 is switched to the PLP mode.

In an embodiment, the error detection circuit 257 detects an abnormal operation error ASSERT of the controller 210 and outputs an error signal.

In an embodiment, after the PLP mode is initiated, the error detection circuit 257 checks whether the backup of the recovery data is completed within the first threshold time determined by the debug data management circuit 253. If the backup is not completed within the first threshold time, the error detection circuit 257 outputs an error signal.

In another embodiment, after the PLP mode is initiated, the error detection circuit 257 checks whether the backup of each type of recovery data is completed within the second threshold time determined by the debug data management circuit 253. If the backup of a specific type of recovery data is not completed within its corresponding second threshold time, the error detection circuit 257 outputs an error signal.

Upon output of the error signal from the error detection circuit 257, the dump circuit 255 backs up the debug data to the nonvolatile memory apparatus 220.

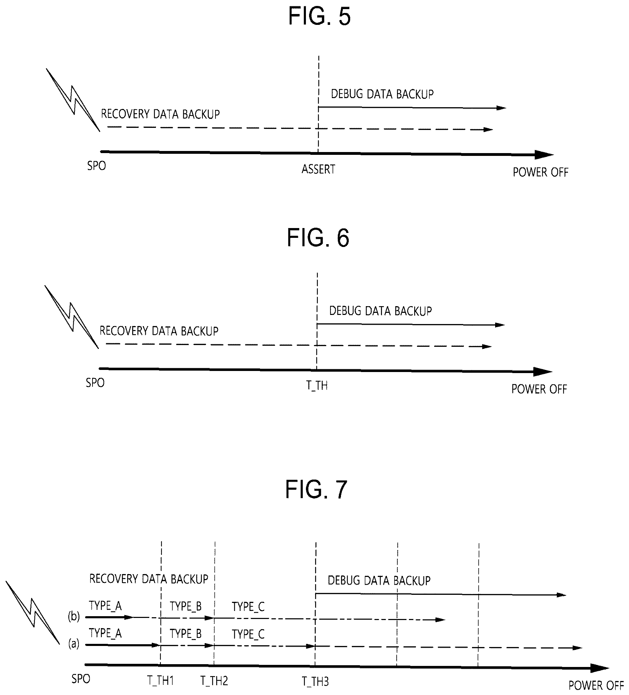

FIGS. 5 to 7 are conceptual diagrams illustrating a debug data backup method in accordance with embodiments.

Referring to FIG. 5, when the external power supply voltage VEXT falls below the preset reference value and an SPO event is detected, the controller 210 switches the data storage apparatus 200 to the PLP mode and initiates recovery data backup.

During the recovery data backup, when the abnormal operation error ASSERT of the controller 210 is detected, the controller 210 outputs an error signal. The controller 210 backs up the debug data to the nonvolatile memory apparatus 220 in response to the error signal.

Referring to FIG. 6, when the external power supply voltage VEXT falls below the preset reference value and the SPO event is detected, the controller 210 switches the data storage apparatus 200 to the PLP mode and initiates the recovery data backup.

During the recovery data backup, when a first threshold time T_TH, which is determined based on the size of debug data or both the size of the debug data and the remaining life of the auxiliary power supply 241, is reached, the controller 210 checks whether the recovery data backup has been completed.

If the recovery data backup is not completed when the first threshold time T_TH is reached, the controller 210 backs up the debug data in response to the error signal.

Referring to FIG. 7, when the external power supply voltage VEXT falls below the preset reference value and the SPO event is detected, the controller 210 switches the data storage apparatus 200 to the PLP mode and initiates the recovery data backup.

The controller 210 determines the second threshold time required for backing up each type of recovery data. For example, the controller 210 may determine a second threshold time T_TH1 required for backing up first-type recovery data, a second threshold time T_TH2 required for backing up second-type recovery data, and a second threshold time T_TH3 required for backing up third-type recovery data.

If the backup of any type of recovery data is not completed within its corresponding second threshold time T_TH1, T_TH2, or T_TH3, the controller 210 backs up debug data to the nonvolatile memory apparatus 220 in response to an error signal.

FIG. 7 (a) illustrates the second threshold times T_TH1 to T_TH3 determined in order to back up type-A recovery data TYPE_A, type-B recovery data TYPE_B, and type-C recovery data TYPE_C. FIG. 7 (b) illustrates times used to actually back up the type-A recovery data TYPE_A, the type-B recovery data TYPE_B, and the type-C recovery data TYPE_C.

The type-A recovery data TYPE_A and the type-B recovery data TYPE_B are backed up within their respective second threshold times T_TH1 and TH_TH2. However, the type-C recovery data TYPE_C is not backed up within the second threshold time T_TH3.

Even though the backup of the type-C recovery data TYPE_C has not been completed within the second threshold time T_TH3, the controller 210 backs up the debug data to the nonvolatile memory apparatus 220 when the second threshold time T_TH3 is reached.

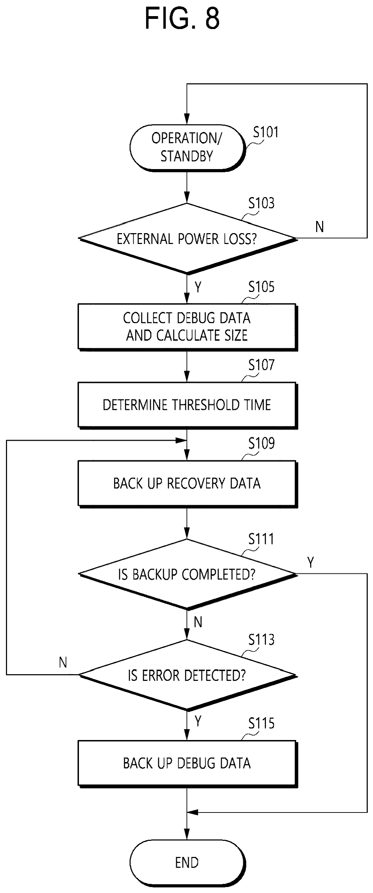

FIG. 8 is a flowchart illustrating an operating method of the data storage apparatus 200 in accordance with an embodiment.

During the operation or standby state of the data storage apparatus 200 (S101), the controller 210 determines whether the external power loss (SPO) event has occurred, indicated by the external power supply voltage VEXT falling below the preset reference value (S103).

If the SPO event is not detected (S103:N), the controller 210 continues monitoring for the occurrence of the SPO event (S103).

If the SPO event is detected (S103:Y), the controller 210 switches the data storage apparatus 200 to the PLP mode, collects debug data, and calculates the size of the debug data (S105). The debug data includes HW information, FW information, log information, or the like.

In addition, the controller 210 measures the remaining life of the auxiliary power supply 241, such as the remaining operational time before the auxiliary power supply 241 is fully discharged.

The controller 210 determines the minimum time required for backing up the debug data based on the size of the debug data and determines the first threshold time based on the minimum time (S107). In an embodiment, the first threshold time is determined based on either the size of the debug data alone or in combination with the remaining life of the auxiliary power supply 241. For example, the controller 210 may determine the first threshold time by considering the time required to back up the debug data before the auxiliary power supply 241 is fully discharged.

After switching to the PLP mode, the controller 210 backs up recovery data to the nonvolatile memory apparatus 220 (S109).

The controller 210 checks whether the backup of the recovery data has been completed (S111). If the backup is complete (S111:Y), the controller 210 terminates the operation of the data storage apparatus 200.

If the backup of the recovery data is not completed (S111:N), the controller 210 checks whether an error has been detected (S113).

In an embodiment, the controller 210 detects an error when the abnormal operation error ASSERT of the controller 210 is detected during the recovery data backup.

In an embodiment, the controller 210 detects an error if the backup of the recovery data has not been completed when the first threshold time has elapsed.

In an embodiment, the controller 210 detects an error if the backup of a corresponding type of recovery data is not completed when the second threshold time has elapsed. The second threshold time is determined based on the type-specific size of the recovery data.

If an error in the backup of the recovery data is detected (S113:Y), the controller 210 backs up the debug data to the nonvolatile memory apparatus 220 (S115).

If no error is detected in the backup of the recovery data (S113:N), the controller 210 continues to back up recovery data to the nonvolatile memory apparatus 220 (S109).

Accordingly, even if the recovery data is not backed up to the nonvolatile memory apparatus 220, the debug data can still be backed up to the nonvolatile memory apparatus 220. Subsequently, when power is restored to the data storage apparatus 200 and the data storage apparatus 200 is booted, the data storage apparatus 200 can operate normally using the backed-up debug data.

A person skilled in the art to which the present disclosure pertains can understand that the present disclosure may be carried out in other specific forms without changing its technical spirit or essential features. Therefore, it should be understood that the embodiments described above are illustrative in all aspects, not limitative. The scope of the present disclosure is defined by the claims to be described below rather than the detailed description, and it should be construed that all changes or modified forms derived from the meaning and scope of the claims and the equivalent concept thereof are included in the scope of the present disclosure.

## Claims

1. A data storage apparatus, comprising:
a nonvolatile memory apparatus; and
a controller configured to set a first threshold time associated with a power loss protection operation when the data storage apparatus enters a power loss protection mode due to an external power loss and to back up debug data to the nonvolatile memory apparatus upon reaching the first threshold time after the external power loss.

2. The data storage apparatus according to claim 1, wherein the controller is configured to back up recovery data to the nonvolatile memory apparatus upon entering the power loss protection mode, and to back up the debug data in a case where the backup of the recovery data has not been completed when the first threshold time is reached.

3. The data storage apparatus according to claim 2, wherein the recovery data has a plurality of types, and
the controller is configured to set a second threshold time for each type of recovery data, and to back up the debug data in a case where backup of corresponding recovery data has not been completed when the second threshold time is reached after the external power loss.

4. The data storage apparatus according to claim 1, wherein the controller is configured to back up recovery data to the nonvolatile memory apparatus upon entering the power loss protection mode, and to back up the debug data upon detecting an operation error of the controller.

5. The data storage apparatus according to claim 1, wherein the controller is configured to determine the first threshold time based on a size of the debug data.

6. The data storage apparatus according to claim 1, further comprising:
an auxiliary power supply,
wherein the controller is configured to determine the first threshold time on the basis of a size of the debug data and a discharge time of the auxiliary power supply.

7. A data storage apparatus, comprising:
a volatile memory apparatus;
a nonvolatile memory apparatus; and
a controller configured to back up recovery data stored in the volatile memory apparatus to the nonvolatile memory apparatus when the data storage apparatus enters a power loss protection mode due to an external power loss and to back up debug data to the nonvolatile memory apparatus upon detecting a preset error during the backup operation of the recovery data.

8. The data storage apparatus according to claim 7, wherein the preset error comprises an operation error of the controller.

9. The data storage apparatus according to claim 7, wherein the preset error comprises an error in which the back-up operation of the recovery data has not been completed within a threshold time.

10. The data storage apparatus according to claim 9, wherein the controller is configured to determine the threshold time based on a size of the debug data.

11. The data storage apparatus according to claim 9, further comprising:
an auxiliary power supply,
wherein the controller is configured to determine the threshold time based on a size of the debug data and a discharge time of the auxiliary power supply.

12. The data storage apparatus according to claim 7, wherein the recovery data has a plurality of types, and
the preset error comprises an error in which the backup of recovery data for any type has not been completed when a second threshold time, determined for the type, is reached.

13. The data storage apparatus according to claim 7, wherein the controller is configured to collect the debug data and calculates a size of the debug data when the data storage apparatus enters the power loss protection mode before performing the backup operation of the recovery data.
